**Europäisches Patentamt**

(19) **European Patent Office**

**Office européen des brevets**

(11) **EP 0 812 882 A1**

(12) **EUROPEAN PATENT APPLICATION**
published in accordance with Art. 158(3) EPC

(43) Date of publication:
17.12.1997 Bulletin 1997/51

(51) Int. Cl.$^6$: **C08L 23/00**, C08K 7/14,
C08K 5/18, C08K 5/3475,
C08K 5/098, C08K 5/101

(21) Application number: 96943290.5

(22) Date of filing: 25.12.1996

(86) International application number:
PCT/JP96/03786

(87) International publication number:
WO 97/24399 (10.07.1997 Gazette 1997/30)

(84) Designated Contracting States:
DE FR GB NL

(30) Priority: 28.12.1995 JP 342696/95
28.12.1995 JP 343606/95

(71) Applicant:
KAWASAKI STEEL CORPORATION
Chuo-ku, Kobe-shi, Hyogo 651 (JP)

(72) Inventors:
 • ENOMOTO, Norihide
   Tokyo Head Office Kawasaki Steel
   2-chome Chiyoda-ku Tokyo 100 (JP)
 • OGAWA, Taichi
   Tokyo Head Office,
   Kawasaki Steel Co
   2-chome Chiyoda-ku Tokyo 100 (JP)

(74) Representative:
   Henkel, Feiler, Hänzel & Partner
   Möhlstrasse 37
   81675 München (DE)

(54) **LONG-FIBERGLASS REINFORCED POLYOLEFIN MOLDINGS IMPROVED IN WEATHERING RESISTANCE AND COMPOSITIONS USEFUL AS THE RAW MATERIAL THEREFOR**

(57) A long-glass-fiber reinforced polyolefin molding is conventionally known as being excellent in mechanical strength, but has a drawback of low weathering resistance. Also, the addition of a colorant causes deterioration in the mechanical properties of a conventional molding. The present invention provides a long-glass-fiber reinforced polyolefin molding having excellent weathering resistance and high mechanical strength, and a material composition therefor, and also provides a molding which causes no deterioration in both properties even by coloring, and a composition therefor.

Namely, the present invention provides a composition comprising at least (A) long-glass-fiber reinforced polyolefin pellets which are obtained by impregnating a bundle of glass fibers with a polyolefin and then cutting the glass fibers in a length of 2 to 150 mm in the direction of the fibers, and which contain 10 to 90 wt% of glass fibers, the glass fibers in the pellets being arranged in substantially the same length as the pellets, (B) a photostabilizer, and (C) a photoabsorber, wherein the total amount of (B) the photostabilizer and (C) the photoabsorber is 0.25 to 7.5 parts by weight based on the total of 100 parts by weight of polyolefin.

The present invention also provides a long-glass-fiber reinforced polyolefin molding comprising at least

(a) a polyolefin, (b) glass fibers having a fiber length of 2 to 150 mm, (B) a photostabilizer, and (C) a photoabsorber, wherein the total amount of (B) the photostabilizer and (C) the photoabsorber is 0.25 to 7.5 parts by weight based on the total of 100 parts by weight of polyolefin, the content of the glass fibers is 10 to 90 wt%.

It was also found that even when the molding is colored black with carbon black or colored gray with zinc sulfide, the both properties can be maintained by setting the mixing ratio to the additives to within a specified range.

EP 0 812 882 A1

Printed by Xerox (UK) Business Services
2.15.4/3.4

## Description

### Field of the Invention

The present invention relates to a long-glass-fiber-reinforced polyolefin molding having excellent weather resistance and high mechanical strength, and a material composition therefor.

The present invention further relates to a long-glass-fiber-reinforced colored molding and a material composition therefor.

### Background Art

Since glass-fiber reinforced polyolefin moldings are excellent in not only many mechanical strength properties such as tensile strength, flexural strength, flexural modulus, impact resistance, tensile creep and fatigue strength but also heat resistance and moldability, the moldings are widely used as various industrial components.

Particularly, long-fiber-reinforced polyolefin moldings obtained by molding long-glass-fiber reinforced polyolefin pellets obtained by impregnating a bundle of continuous fibers with polyolefin and then cutting the fibers can be filled with glass fibers with a high density, and thus exhibit excellent properties such as impact strength, creep property and vibration fatigue property, as compared with ordinary short-fiber-reinforced polyolefin moldings obtained by kneading chopped strands of glass fibers and resin and then molding.

Particularly, pellets obtained by drawing a bundle of continuous fibers in melted polyolefin to impregnate the fibers with the polyolefin, i.e., a drawing method, can be filled with glass fibers with a high density because the glass fibers are arranged in the same direction, and thus long-glass-fiber reinforced polyolefin moldings having high mechanical strength can be obtained:

Such long-glass-fiber reinforced polyolefin moldings are widely used in the fields of automobile parts, electrical parts and building materials in order to make the best use of the properties thereof.

However, the long-glass-fiber reinforced polyolefin moldings exhibit the above-described excellent mechanical properties within a short period of time, but long-term use, particularly long-term outdoor use, causes deterioration in the olefin resin itself due to the action of heat, oxygen or light during use, thereby causing deterioration in the surface appearance and significant deterioration in mechanical strength. Therefore, in some cases, the moldings cannot resist practical use, and are not necessarily satisfactory in weathering properties.

Although various efforts and investigation are conventionally made to improve weather resistance of polyolefin and short-fiber reinforced polyolefin, long-glass-fiber reinforced polyolefin have not yet been sufficiently investigated.

Namely, as an example of improvement in weather resistance of polyolefin, Japanese Patent Unexamined Publication No. 60-124642 discloses a stabilized polyolefin composition containing 100 parts by weight of polyolefin and 0.1 to 1 part by weight each of specified hindered amine compound, specified high-molecular-weight phenol compound and specified phosphite compound.

Also, Japanese Patent Unexamined Publication No. 3-265638 suggests a stabilized polypropylene composition containing a specified hindered piperidine.

Further, Japanese Patent Unexamined Publication No. 6-212032 discloses a composition containing 100 parts by weight of polyolefin resin containing crystalline polyolefin and/or olefinic elastomer, 0.05 to 0.20 part by weight of hindered phenol antioxidant, 0.05 to 0.20 part by weight of phosphorus antioxidant, 0.10 to 0.50 part by weight of ultraviolet absorber and 0.10 to 0.50 part by weight of N-O-R or N-CO-T type hindered amine photostabilizer.

However, all of the above compositions are not reinforced with glass fibers, and thus it is needless to say that the mechanical strength thereof is lower than that of a long-glass-fiber reinforced polyolefin molding which is an object of the present invention.

On the other hand, in regard to short-fiber reinforced polyolefin reinforced with an inorganic filler such as glass fibers or the like, Japanese Patent Unexamined Publication No. 62-4733 discloses a composition containing 100 parts by weight of polyolefin, 1 to 100 parts by weight of inorganic filler, (1) 0.01 to 0.5 part by weight of benzotriazole or benzophenone ultraviolet absorber, (2) 0.01 to 1 part by weight of hindered amine or phenylbenzoate photostabilizer and (3) 0.01 to 1 part by weight of specified organic phosphorus compound.

However, in this composition, a high charging rate of a filler which is one of the characteristics of long-glass-fiber reinforced polyolefin, is not achieved, and the mechanical strength is insufficient.

In regard to the long-glass-fiber reinforced polyolefin, Japanese Patent Unexamined Publication Nos. 3-121146 and 2-92756 respectively make the optional descriptions "Generally known materials which are added to thermoplastic resins, for example, stabilizers such as an antioxidant, a heat-stabilizer, an ultraviolet absorber, and the like; an antistatic agent, a flame retardant, flame-retardant auxiliary, a colorant such as a dye or pigment, a lubricant, a plasticizer, a crystallization accelerator, a crystal nuclear agent, etc. can be further added." and "The composition of the present invention may contain stabilizers such as an antioxidant and ultraviolet absorber, a crystal nuclear agent, an antistatic agent, a flame retardant, a plasticizer, a lubricant, a pigment, etc." Furthermore, in both publications, no attempt is made to improve weathering resistance, and combination of an ultraviolet absorber and a photostabilizer, which is a feature of the invention of this application, is neither disclosed nor suggested.

As described above, conventional long-glass-fiber reinforced polyolefin moldings are difficult to hold weather resistance which causes no change in tone under such severe conditions that the moldings are exposed to direct sunlight containing much ultraviolet rays, and which permits resistance to use for a long period of time of about 2000 hours or more in an accelerated test.

On the other hand, long-glass-fiber reinforced polyolefin moldings are conventionally frequently used for automobile parts and electrical parts in order to make the best use of the mechanical properties thereof, as described above. In this case, the moldings used are almost always colored.

Although carbon black is generally used for coloring a resin material black, in order to color other colors, a white pigment is used as a base, and a desired pigment is then selected from pigments of red, yellow, blue, etc. and mixed with the base. Therefore, a white pigment pays an important role in coloring a resin. Most popular white pigment is titanium oxide having the advantages that it has uniform small particle size, is scientifically inert, and is hardly decomposed even by ultraviolet rays.

When a long-glass-fiber reinforced polyolefin molding is used as an interior or exterior part of an automobile, the molding is frequently colored gray or black to impart a design thereto. When the molding is colored gray which is widely used, a desired tone is generally obtained by adding carbon black as a black pigment to titanium oxide as a white pigment base.

However, in use of titanium oxide as a white pigment for the long-glass-fiber reinforced polyolefin molding, since titanium oxide has high surface hardness (Moh's hardness), the contained glass fibers are damaged during molding, thereby causing the problem of deteriorating mechanical properties such as the tensile strength, flexural strength, flexural modulus, impact strength, creep properties or vibration fatigue.

Disclosure of the Invention

The inventors carried out intensive study for developing a long-glass-fiber reinforced polyolefin molding in which weather resistance is improved while maintaining mechanical strength.

In the course of study, it was found that a long-glass-fiber reinforced polyolefin molding filled with glass fibers at a high charging rate tends to have lower weather resistance than that of a short-glass-fiber reinforced polyolefin molding at a low charging rate. The reason for this was thought to be that since the long-glass-fiber reinforced polyolefin molding has a high fiber charge, many glass fibers present on the surface of the molding enhances an optical action such as refraction, scattering, reflection or convergence of light, thereby deteriorating the polyolefin, and weather resistance, particularly light resistance.

Therefore, various conventional additives mainly including ultraviolet absorbers and photostabilizers were studied. However, it was found that single use of an ultraviolet absorber, a photostabilizer or an antioxidant does not have significant effects on weather resistance. It was also found that when the amount of each additive added is increased, the mechanical strength of a molding rather deteriorates due to interference with wettability between fibers and a resin.

However, surprisingly, the inventors found that a long-glass-fiber reinforced polyolefin molding having both weather resistance and mechanical strength can be obtained by combining both an ultraviolet absorber and a photostabilizer, resulting in achievement of the present invention.

The ultraviolet absorber and the photostabilizer were thought to have a synergistic effect, and it was also found that a long-glass-fiber reinforced polyolefin molding having both weather resistance and mechanical strength can be obtained without excessively increasing the total amount of both additives added based on the polyolefin resin.

It was further found that addition of an antioxidant to both additives improves weather resistance and permits achievement of the object without increasing the total amount of the three additives added based on the polyolefin.

As a result of intensive research on coloring of the long-glass-fiber reinforced polyolefin molding, it was found that when zinc sulfide is used as a white pigment as a coloring base, unlike conventional moldings, deterioration in mechanical properties is suppressed, and a long-glass-fiber reinforced polyolefin molding having both weather resistance and good mechanical properties can be obtained.

In other words, the present invention provides a first composition comprising at least (A) long-glass-fiber reinforced polyolefin pellets obtained by impregnating a bundle of glass fibers with polyolefin and cutting the fibers in a length of 1 to 150 mm in the direction of the fibers, and containing 1 to 90 wt% of glass fibers, the glass fibers in the pellets being arranged in substantially the same length as the pellets, (B) a photostabilizer, and (C) a photoabsorber, wherein the total amount of the (B) the photostabilizer and (B) the photoabsorber is 0.25 to 7.5 parts by weight based on the total amount of 100 parts by weight of polyolefin.

The present invention also provides a second composition wherein the first composition further comprises (D) carbon black, and the total amount of (B) the photostabilizer, (C) the photoabsorber and (D) carbon black is 1.0 to 8.0 parts by weight based on the total amount of 100 parts by weight of polyolefin.

The present invention further provides a third composition wherein the first composition further comprises (D) car-

EP 0 812 882 A1

bon black and (E) zinc sulfide, and the total amount of (B) the photostabilizer, (C) the photoabsorber, (D) carbon black and (E) zinc sulfide is 1.0 to 8.0 parts by weight based on the total amount of 100 parts by weight of polyolefin.

The present invention also provides a fourth composition wherein the first composition further comprises (F) an antioxidant, and the total amount of (B) the photostabilizer, (C) the photoabsorber and (F) the antioxidant is 0.25 to 7.5 parts by weight based on the total amount of 100 parts by weight of polyolefin.

The present invention also provides a fifth composition wherein the fourth composition further comprises (D) carbon black, and the total amount of (B) the photostabilizer, (C) the photoabsorber, (D) carbon black and (F) the antioxidant is 1.0 to 8.0 parts by weight based on the total amount of 100 parts by weight of polyolefin.

The present invention further provides a sixth composition wherein the fourth composition further comprises (D) carbon black and (E) zinc sulfide, and the total amount of (B) the photostabilizer, (C) the photoabsorber, (D) carbon black, (E) zinc sulfide and (F) the antioxidant is 1.0 to 8.0 parts by weight based on the total amount of 100 parts by weight of polyolefin.

The present invention further provides a seventh composition wherein in one of the first to sixth compositions, the photostabilizer comprises at least one selected from hindered amines, and the photoabsorber comprises at least one selected from the group consisting of benzotriazoles and benzoates.

The present invention further provides an eighth composition wherein in any one of the fourth to sixth compositions, the antioxidant comprises at least one selected from the group consisting of phenols and phosphorus compounds.

The present invention further provides a ninth composition wherein in the eighth composition, the antioxidant comprises at least one selected from the group consisting of phenols and phosphorus compounds, the photostabilizer comprises at least one selected from hindered amines, and the photoabsorber comprises at least one selected from the group consisting of benzotriazoles and benzoates.

The present invention further provides a tenth composition wherien in any one of the first to sixth compositions, the polyolefin comprises at least one selected from the group consisting of polyethylene, polypropylene, polybutylene, polypentene and substitution products thereof.

The present invention further provides an eleventh composition wherein in any one of the first to sixth compositions, the polyolefin comprises at least one selected from the group consisting of modified polyethylene, modified polypropylene, modified polybutylene, modified polypentene and substitution products thereof.

The present invention further provides a twelfth composition wherein in any one of the first to six compositions, the glass fibers are glass fibers having a weight average fiber length of 0.2 mm or more.

The present invention further provides a thirteenth composition obtained by melting and kneading any one of the first to six compositions.

The present invention further provides a long-glass-fiber reinforced polyolefin molding obtained by melt-molding any one of the first to six compositions.

The present invention further provides a second long-glass-fiber reinforced polyolefin molding wherein the above molding is obtained by melt-molding by at least one molding method selected from the group consisting of injection molding, injection-press molding, uniaxial extrusion molding, biaxial extrusion molding and heating press.

The present invention further provides a third long-glass-fiber reinforced polyolefin molding comprising (a) polyolefin, (b) glass fibers having a fiber length of 2 to 150 mm, (B) a photostabilizer, and (C) a photoabsorber, wherein the total amount of (B) the photostabilizer and (C) the photoabsorber is 0.25 to 7.5 parts by weight based on the total amount of 100 parts by weight of polyolefin, an the glass fiber content is 10 to 90 wt%.

The present invention further provides a fourth molding wherein the third molding further comprises (D) carbon black, and the total amount of (B) the photostabilizer, (C) the photoabsorber and (D) carbon black is 1.0 to 8.0 parts by weight based on the total amount of 100 parts by weight of polyolefin.

The present invention further provides a fifth molding wherein the third molding further comprises (D) carbon black and (E) zinc sulfide, and the total amount of (B) the photostabilizer, (C) the photoabsorber, (D) carbon black and (E) zinc sulfide is 1.0 to 8.0 parts by weight based on the total amount of 100 parts by weight of polyolefin.

The present invention also provides a sixth molding wherein the third molding further comprises (F) an antioxidant, and the total amount of (B) the photostabilizer, (C) the photoabsorber and (F) the antioxidant is 0.25 to 7.5 parts by weight based on the total amount of 100 parts by weight of polyolefin.

The present invention also provides a seventh molding wherein the sixth molding further comprises (D) carbon black, and the total amount of (B) the photostabilizer, (C) the photoabsorber, (D) carbon black and (F) the antioxidant is 1.0 to 8.0 parts by weight based on the total amount of 100 parts by weight of polyolefin.

The present invention further provides an eighth molding wherein the sixth molding further comprises (D) carbon black and (E) zinc sulfide, and the total amount of (B) the photostabilizer, (C) the photoabsorber, (D) carbon black, (E) zinc sulfide and (F) the antioxidant is 1.0 to 8.0 parts by weight based on the total amount of 100 parts by weight of polyolefin.

The present invention further provides a ninth molding wherein in any one of the third to eighth moldings, the photostabilizer comprises at least one selected from hindered amines, and the photoabsorber comprises at least one selected from the group consisting of benzotriazoles and benzoates.

4

The present invention further provides a tenth molding wherein in any one of the sixth to eighth moldings, the antioxidant comprises at least one selected from the group consisting of phenols and phosphorus compounds.

The present invention further provides an eleventh molding wherein in the tenth molding, the antioxidant comprises at least one selected from the group consisting of phenols and phosphorus compounds, the photostabilizer comprises at least one selected from hindered amines, and the photoabsorber comprises at least one selected from the group consisting of benzotriazoles and benzoates.

The present invention further provides a twelfth molding wherein in any one of the third to eighth moldings, the polyolefin comprises at least one selected from the group consisting of polyethylene, polypropylene, polybutylene, polypentene and substitution products thereof.

The present invention further provides a thirteenth molding wherein in any one of the third to eighth moldings, the polyolefin comprises at least one selected from the group consisting of modified polyethylene, modified polypropylene, modified polybutylene, modified polypentene and substitution products thereof.

The present invention further provides a fourteenth molding wherein in any one of the third to eighth moldings, the glass fibers are glass fibers having a weight average fiber length of 0.2 mm or more.

## Best Mode for Carrying Out the Invention

The present invention will be described in further detail below.

The glass fibers used in the present invention comprise E-glass, S-glass, C-glass, AR-glass, T-glass, D-glass or R-glass, and preferably have a glass fiber diameter of 3 to 40 $\mu$m. With a glass fiber diameter of less than 3 $\mu$m, when the same glass content is attained, the relative number of glass fibers is increased, thereby causing difficulties in impregnation with a resin. With a glass fiber diameter of over 40 $\mu$m, the surface appearance of the molding significantly deteriorates. The optimum glass fiber diameter is 9 to 20 $\mu$m.

The glass fibers used in the present invention may be surface-treated with a surface treating agent containing a coupling agent. As the coupling agent, a silane coupling agent, a titanate coupling agent and a mixture thereof can be used. Examples of silane coupling agents include aminosilane, epoxysilane, amidosilane, amidodisilane, azidosilane, acrylsilane, and the like. Of these compounds, aminosilane and epoxysilane are preferably used, and an aminosilane coupling agent is more preferable.

Although the polyolefin used in the present invention is not limited, at least one polyolefin selected from the group consisting of polyethylene, polypropylene, polybutylene, polypentene, and substitution products thereof. These preferable polyolefins are more preferably modified.

The polyolefin used in the present invention is further described. The polyolefin includes homopolymers and copolymers of ethylene, propylene, butene, 4-methylpentene, and the like; random, block or graft copolymers with polar monomers such as vinyl acetate, acrylic acid, acrylic ester, maleic anhydride and the like. The polyolefin also includes compositions comprising the above polymers and less than 50% by weight of synthetic rubber such as ethylene-$\alpha$-olefin copolymer rubber, isoprene rubber, isobutylene rubber and the like. Examples such polymers include high-pressure ethylene homopolymers, high-pressure ethylene-propylene copolymers, low-pressure ethylene homopolymers, low-pressure ethylene-propylene copolymers, low-pressure ethylene-1-butene copolymers, low-pressure ethylene-1-hexene copolymers, medium-pressure ethylene copolymers, high-pressure ethylene-vinyl acetate copolymers, propylene homopolymers, propylene-ethylene random or block copolymers and the like. Of these polymers, crystalline propylene copolymers, particularly polypropylene, are preferable.

Such polypropylene may be a copolymer containing propylene as a main component and an ethylene component, for example, propylene-ethylene block copolymer, or block copolymer of propylene and ethylene-propylene rubber, other than propylene homopolymers. Of these polymers, the latter copolymers, particularly, a block copolymer containing an ethylene component, is preferably used. In use of a copolymer containing an ethylene component, the content of the ethylene component is generally 20% by weight or less on the basis of the weight of the copolymer used. The polypropylene used in the present invention may further contain $\alpha$-olefin copolymer rubber.

The $\alpha$-olefin copolymer rubber represents a rubber polymer obtained by copolymerizing at least two $\alpha$-olefins. The $\alpha$-olefins used as copolymer components have a carbon number of, for example, 2 to 12. Preferable $\alpha$-olefin copolymer rubber is copolymer rubber of ethylene and another $\alpha$-olefin. The $\alpha$-olefin used for copolymerization with ethylene has a carbon number of, for example, 3 to 12. Examples of such $\alpha$-olefin include propylene, 1-butene, 1-pentene, 1-hexene, 4-methyl-1-pentene, 1-octene, and mixtures thereof. Of these compounds, propylene or 1-butene is preferable.

The long-glass-fiber reinforced polyolefin pellets used as component (A) in the present invention are pellets which are obtained by impregnating a bundle of continuous glass fibers for reinforcement with polyolefin, and then cutting the fibers in a length of 2 to 150 mm in the direction of the fibers, and which have a glass fiber content of 10 to 90 wt%, the glass fibers in the pellets being arranged in substantially the same length as the pellets.

Any method may be used as a method of impregnating with the polyolefin. Examples of the impregnation method include a method in which glass fibers are impregnated with an emulsion of polyolefin to be coated therewith, and then dried; a method in which a suspension of polyolefin powder is adhered to glass fibers, and then dried, followed by heat-melting impregnation; a method in which glass fibers are charged, and polyolefin powder is adhered to the glass fibers, followed by heat-melting impregnation; a method in which glass fibers are impregnated with a solution of polyolefin in a solvent, and the solvent is then removed; a method in which mixed fibers of polyolefin continuous fibers and glass continuous fibers are heated, and then impregnated with melted polyolefin, a method in which glass fibers are impregnated with polyolefin by drawing the fibers in melted polyolefin, i.e., a drawing method, etc. Of these methods, since the drawing method is capable of filling glass fibers with a very high density, and the apparatus and process thereof are simple, the drawing method is preferably used.

The drawing method will be further described. In this method, a bundle of glass fibers comprising several thousands to several tens of thousands filaments is completely impregnated with polyolefin by drawing the bundle on a bar, roll or die while opening, and then drawing the bundle in heat-melted polyolefin so as to improve wettability between the hydrophilic glass fibers and the non-polar polyolefin. Examples of such a method are disclosed in US Patent Nos. 4479998, 4549920 and 4559262. As the long-glass-fiber reinforced polyolefin pellets, the pellets produced by these methods are preferably used.

Further, for example, Japanese Patent Unexamined Publication No. 5-17631 discloses a method using low-viscosity polypropylene having a melt flow rate of 30 g/10 min. or more, which is measured by the method of ASTM D-1238 (load: 2.16 kg, temperature: 230°C), in order to facilitate impregnation with melted resin, Japanese Patent Examined Publication No. 3-25340 discloses a method of impregnating with a resin having a very low molecular weight, and Japanese Patent Unexamined Publication No. 3-181528 discloses a method in which in order to improve wettability, glass fibers are surface-treated, and modified polypropylene resin is used. Component (A) of the present invention may be produced by any one of these methods.

Further, the long-glass-fiber reinforced polyolefin pellets of the present invention are obtained by performing the above-described impregnation and then cutting the fibers in a length of 2 to 150 mm in the direction of the fibers, the glass fibers being present in substantially the same length as the pellets. Although the cutting method is not limited, the fibers are preferably cut substantially perpendicularly to the direction of the fibers. In general, in the pellets obtained by this cutting method, the glass fibers are present in a substantially parallel arrangement. If the pellets have a length of less than 2 mm, the glass fibers in the molding become short, and strength, particularly impact strength, deteriorates. With a glass fiber length of over 150 mm, the effects of improving strength, impact strength, creep resistance and variation fatigue resistance, which are characteristic of long-fiber reinforcement, are insufficient, and, undesirably clogging occurs in a hopper during injection molding or extrusion molding, or segregation occurs in a mixture with polyolefin resin. The preferable pellet length is 3 to 25 mm. The pellets have any sectional form, such as a circular form, an elliptical form or a square form, as long as the length is 2 to 150 mm. The length of a section of the pellets is preferably such a value that the aspect ratio (the ratio of the length of the pellets to the length of the section thereof) is 0.1 to 10, more preferably 0.2 to 5.

The glass fiber content of the long-glass-fiber reinforced polyolefin pellets of the present invention is 10 to 90 wt%. With a glass fiber content of less than 10 wt%, the advantages of application to a master batch cannot be sufficiently used, an economical disadvantage occurs, and the application range of the molded product after dilution becomes narrow, thereby deteriorating the industrial value. The glass fiber content is preferably 10 to 75 wt%, more preferably 15 to 65 wt%.

The photostabilizer used as component (B) in the present invention means an agent having the function to capture the radicals produced by photo-deterioration of polyolefin, and preferably comprises at least one photostabilizer selected from the group consisting of amine compounds and phenylbenzoate photostabilizers.

Of these stabilizers, at least one selected from hindered amine and phenyl benzoate photostabilizers is preferable. Examples of such photostabilizers include bis(2,2,6,6-tetramethyl-4-piperidyl) sebacate, condensation products of succinic acid and N-(2-hydroxypropyl)-2,2,6,6-tetramethyl-4-hydroxypiperidine, tetrakis(2,2,6,6-tetramethyl-4-piperidyl), 1,2,3,4-butanetetracarboxylate, polycondensation products of N,N'-bis(2,2,6,6-tetramethyl-4-piperidyl) hexamethylenediamine and 1,2-dibromoethane, bis(2,2,6,6-tetramethylpiperidyl) adipate, bis(2,2,6,6-tetramethylpiperidyl) fumarate, poly[[6-(1,1,3,3-tetramethylbutyl) imino-1,3,5-triazine-2,4-diyl][(2,2,6,6-tetramethyl-4-piperidyl) imino]], tetrakis(1,2,2,6,6-pentamethyl-4-piperidyl) 1,2,3,4-butanetetracarboxylate, (2,4-di-t-butylphenyl-3,5-di-t-butyl-4-hydroxybenzoate, 4-octylphenyl-3,5-di-t-butyl-4-hydroxybenzoate, n-hexadecyl-3,5-di-t-butyl-4-hydroxybenzoate, and the like.

The photoabsorber used as component (C) in the present invention means a photoabsorber having the function to absorb light (frequently light in the ultraviolet region) with a wavelength which causes decomposition or deterioration of polyolefin, and preferably comprises at least one photoabsorber selected from the group consisting of salicylic acid derivatives, benzophenone, benzotriazole and benzoate photoabsorbers. Of these photoabsorbers, at least one selected from benzotriazole and benzoate photoabsorbers is more preferable.

Examples of benzotriazole photoabsorbers include 2-(3-t-butyl-5-methyl-2-hydroxyphenyl)-5-chlorobenzotriazole, 2-(3,5-di-t-butyl-2-hydroxyphenyl)-5-chlorobenzotriazole, 2-(5-methyl-2-hydroxyphenyl) benzotriazole, 2-(3,5-di-t-butyl-2-hydroxyphenyl) benzotriazole, 2-(2-hydroxy-3,5-di-t-amylphenyl) benzotriazole, 2(2'-hydroxy-5'-methylphenyl) benzotriazole, 2(2'-hydroxy-3'-t-butyl-5'-methylphenyl)-5-chlorobenzotriazole, and the like.

Examples of benzoate photoabsorbers include 2,4-di-t-butylphenyl-3,5-di-t-butyl-4-hydroxybenzoate, hexadecyl-3,5-di-t-butyl-4-hydroxybenzoate, and the like.

The antioxidant used as component (F) in the present invention preferably comprises at least one selected from phenol compounds and phosphorus compounds.

Examples of phenol compounds include 2,6-di-t-butyl-4-methylphenol, 1,3,5-tris(3,5-di-t-butyl-4-hydroxybenzyl) isocyanurate, tetrakis [3-(3,5-di-t-butyl-4-hydroxyphenyl) propionyloxymethyl] methane, and the like. Of these compounds, hindered phenol compounds are preferable. Examples of such phenol compounds include 2,6-di-t-butyl-p-cresol, 2,6-diphenyl-4-octadecyloxyphenol, stearyl (3,5-di-t-butyl-4-hydroxyphenyl) propionate, distearyl (3,5-di-t-butyl-hydroxybenzyl) phosphonate, 2,2'-methylene bis(4-methyl-6-t-butylphenol), 2,2'-methylene bis(4-ethyl-6-t-butylphenyl), bis [3,3-bis(4-hydroxy-3-t-butylphenyl) butyric acid] glycol ester, 4,4'-butylidene bis(6-t-butyl-m-cresol), 2,2'-ethylidene bis(4,6-di-t-butylphenol), 2,2'-ethylidene bis(4-sec-butyl-6-t-butylphenol), 1,1,3-tris(2-methyl-4-hydroxy-5-t-butylphenyl) butane, bis[2-t-butyl-4-methyl-6-(2-hydroxy-3-t-butyl-5-methylbenzyl) phenyl] terephthalate, 1,3,5-tris(2,6-dimethyl-3-hydroxy-4-t-butylbenzyl) isocyanurate, 1,3,5-tris(3,5-di-t-butyl-4-hydroxybenzyl) isocyanurate, 1,3,5-tris(3,5-di-t-butyl-4-hydroxybenzyl)-2,4,6-trimethylbenzene, 1,3,5-tris[(3,5-di-t-butyl-t-hydroxyphenyl) propionyloxyethyl] isocyanurate, tetrakis [methylene-3-(3,5-di-t-butyl-4-hydroxyphenyl) propionate] methane, 2-t-butyl-4-methyl-6-(2'-acryloyloxy-3'-t-butyl-5'-methylbenzyl) phenol, 3,9-bis(1',1'-dimethyl-2'-hydroxyethyl)-2,4,8,1-tetraoxaspiro[5,5] undecane, bis[β-(3-t-butyl-4-hydroxy-5-methylphenyl) propionate, and the like. Of these compounds, 1,3,5-tris (2,6-dimethyl-3-hydroxy-4-t-butylbenzyl) isocyanurate, and tetrakis [methylene-3-(3,5-di-t-butyl-4-hydroxyphenyl) propionate] methane are preferable.

On the other hand, as the phosphorus compounds, phosphorus photostabilizers such as alkyl phosphite, alkyl ally phosphite, allyl phosphite, alkyl phosphonate, allyl phosphonate, and the like can be used. Examples of such phosphorus compounds include distearyl pentaerythritol diphosphite, tris(2,4-di-t-butylphenyl) phosphite, tetrakis (2,4-di-t-butylphenyl)-4,4'-biphenylenephosphonate, bis (2,4-di-t-butylphenyl) pentaerythritol diphosphite, bis (2,6-di-t-butyl-4-methylphenyl) pentaerythritol diphosphite, 1,1,3-tris(2-methyl-4-ditridecylphosphite-5-t-butylphenyl) butane, and the like.

The mechanical properties of the long-glass-fiber reinforced polyolefin molding deteriorate due to the phenomenon that the surface layer is cracked by exposure to sun light or the light from a light source of an accelerated test machine to exposure the glass fibers contained therein, and the exposed glass converges light from the light source and thus causes deterioration in the polyolefin resin. The inventors found that in order to suppress the occurrence of cracks in the surface layer of the molding, both a photostabilizer and a photoabsorber are added in appropriate amounts to the polyolefin resin component.

The first composition of the present invention comprises at least (A) long-glass-fiber reinforced polyolefin pellets, (B) a photostabilizer and (C) a photoabsorber, wherein the total amount of (B) the photostabilizer and (C) the photoabsorber is 0.25 to 7.5 parts by weight based on the total amount of 100 parts by weight of polyolefin used. If the total amount of both additives is less than the above range, the molding have good initial physical properties, but the mechanical properties deteriorate due to the insufficient weather resistance of the molding in long-term outdoor exposure. A total amount of over the upper limit causes no corresponding improvement in the effect, and thus is economically disadvantageous, and causes bleeding in some cases. The preferable amount of the photostabilizer added is 0.1 to 3.0 parts by weight, more preferably 0.1 to 2.0 parts by weight, within the above range of the total amount. Similarly, the preferable amount of the photoabsorber added is 0.05 to 3.0 parts by weight, more preferably 0.1 to 2.0 parts by weight, within the above range of the total amount.

The present invention also provides the second composition wherein the first composition can further comprise (F) the antioxidant, and the total amount of (B) the photostabilizer, (C) the photoabsorber and (F) the antioxidant is 0.25 to 7.5 parts by weight based on the total amount of 100 parts by weight of the polyolefin used.

The preferable amount of the antioxidant added is 0.1 to 2.5 parts by weight, more preferably 0.1 to 2.0 parts by weight, within the above range of the total amount. When a combination of a phenol compound and a phosphorus compound is used as the antioxidant, the mixing ratio by weight of the phenol compound and the phosphorus compound is preferably within the range of 1/10 to 10/1, more preferably within the range of 1/5 to 5/1. In the second composition, the preferable ranges described above for the first composition can be respectively applied to the preferable amounts of tee photostabilizer and the photoabsorber which coexist.

When carbon black and any one of various pigments are not used, with respect to a change in hue of a polyolefin resin molding, the polyolefin resin and additives are easily changed to chromophores or colored compounds by photoreaction because of the small effect of shielding sun light by carbon black and additives. However, generally, the long-glass-fiber reinforced polyolefin molding of the present invention having stable mechanical properties cannot be obtained only by imparting the shielding effect of carbon black and pigments.

In the present invention, the long-glass-fiber reinforced polyolefin molding can be colored without deterioration in both weather resistance and mechanical properties of the molding. In order to color the molding black, carbon black is used, and the following compositions are provided.

The present invention can provide the third composition wherein the first composition can further comprises (D) carbon black, and the total amount of the (B) the photostabilizer, (C) the photoabsorber and (D) carbon black is 1.0 to 8.0 parts by weight based on the total amount of 100 parts by weight of the polyolefin used.

Similarly, the present invention provides the fourth composition wherein the second composition can further comprise (D) carbon black, and the total amount of (B) the photostabilizer, (C) the photoabsorber, (D) carbon black and the (F) the antioxidant is 1.0 to 8.0 parts by weight based on the total amount of 100 parts by weight of the polyolefin used.

In the long-glass-fiber reinforced polyolefin molding colored with carbon black or pigment, the hue of the molding less changes due to the synergistic effect of shielding the long-glass-fiber reinforced polyolefin molding from sun light by carbon black or pigment. The long-glass-fiber reinforced polyolefin molding colored with carbon black or pigment can be used as an exterior or interior resin component of an automobile for a long period of time.

In order to provide a gray color which is frequently desired as a color of an automobile component or the like, the present invention further provides the following compositions.

The present invention can provide the fifth composition wherein the third composition can further comprise (E) zinc sulfide, and the total amount of the (B) the photostabilizer, (C), the photoabsorber, (D) carbon black and (E) zinc sulfide is 1.0 to 8.0 parts by weight based on the total amount of 100 parts by weight of the polyolefin used.

Similarly, the present invention provides the sixth composition wherein the fourth composition can further comprise (E) zinc sulfide, and the total amount of (B) the photostabilizer, (C) the photoabsorber, (D) carbon black, (E) zinc sulfide and (F) the antioxidant is 1.0 to 8.0 parts by weight based on the total amount of 100 parts by weight of the polyolefin used.

In the third or fourth composition, zinc sulfide can be used in place of carbon black. In this case, when the total amount of the additives, (B) + (C) + (E) or (B) + (C) + (D) + (E), is controlled to 1.0 to 8.0 parts by weight based on the total amount of 100 parts by weight of the polyolefin used, the composition can, of course, be used as a base composition for various colors, without deterioration in the weather resistance and mechanical properties of the molding.

Namely, the present invention has a characteristic that zinc sulfide is used as a white pigment. It was found that the use of zinc sulfide for coloring the long-glass-fiber reinforced polyolefin molding improves the tensile strength, flexural strength, flexural modulus, impact strength, vibration fatigue property and creep property of the composition, particularly, the impact strength, as compared with a conventional case in which titanium oxide is used as a white pigment. The reason for this is thought to be that titanium oxide has higher hardness than glass, and thus damages glass fibers, thereby deteriorating impact resistance. Therefore, not only zinc sulfide but also any white pigment having hardness lower than glass do not damage glass fibers and thus can preferably be used as white pigments in the present invention.

Coloring the composition of the present invention improves the design properties and widens the range of application and thus causes the effect of increasing the industrial value. In coloring the composition a color other than black, a white pigment is also used for making clear the color. Zinc sulfide is used as a white pigment base, and the other pigment added is selected according to coloring required for the resin composition. Examples of green pigments are chromium oxide, chrome green (mixture of chrome yellow and iron blue (iron potassium ferrocyanide)), zinc green (mixture of zinc yellow and iron blue), copper chloride phthalocyanine green, phthalocyanine green, naphthol green, dibenzanthrone, malachite green lake, and the like. Examples of blue pigments are ultramarine blue (natural, synthetic), iron blue, copper phthalocyanine blue, cobalt blue, phthalocyanine blue, fast sky blue, indanthrene blue, and the like. Examples of red pigments include red lead, red iron oxide, basic zinc chromate, chrome vermilion, cadmium red, rose red, brilliant carmine (condensed azo-type red), brilliant scarlet, quinacridone red, lithol red, vermilion, thioindigo red, mingamiya red, and the like. Examples of yellow pigments include chrome yellow, zinc yellow, yellow iron oxide, titanium yellow, fast yellow, Hansa yellow, auramine lake, benzidine yellow, indanthrene yellow and the like. Zinc sulfide and any of these pigments are mixed and adjusted so as to obtain desired color and hue.

Although the content of zinc sulfide used in the present invention depends upon desired color and hue, zinc sulfide can be mixed up to the maximum amount of 8 wt% based on the total weight of the composition, and the content of zinc sulfide is preferably 5 wt% or less from the viewpoints of various properties of the composition of the invention, such as the tensile strength, flexural strength, flexural modulus, impact strength, vibration fatigue properties and creep properties.

The above detailed description mainly concerns the compositions of the present invention in comparison with the properties of the moldings obtained by using the compositions as raw materials. In the present invention, of course, the composition may be a simple mixture or a product obtained by melting and kneading a composition, and shaping it in order to impart convenience to handling.

The present invention provides the long-glass-fiber reinforced molding obtained by melt-molding the composition.

Therefore, in regard to the properties of the molding, combinations and preferable amounts of the additives added, such as (B) the photostabilizer, (C) the photoabsorber, (D) carbon black, (E) zinc sulfide, and (F) the antioxidant, and all preferable forms such as the types of preferable additives, polyolefin, the content of glass fibers, and the weight average fiber length of glass fibers, the preferable forms described above for the composition can be applied to the molding.

The melt-molding is preferably performed by at least one molding method selected from the group consisting of injection molding, injection-press molding, monoaxial extrusion, biaxial extrusion, and heating press. The thus-obtained molding is a rod- or plate-shaped contour extrusion molded product or sheet obtained by general injection molding or contour extrusion.

The molding of the present invention is a long-glass-fiber reinforced polyolefin molding comprising at least (a) polyolefin, (b) glass fibers having a fiber length of 2 to 150 mm, (B) the photostabilizer and (C) the photoabsorber, wherein the total amount of (B) the photostabilizer arid (C) the photoabsorber is 0.25 to 7.5 parts by weight based on 100 parts by weight of the total polyolefin, and the glass fiber content is 10 to 90 wt%.

The properties required for the long-glass-fiber reinforced polyolefin molding are the same as the properties of the molding obtained by using the composition as a raw material, i.e., the properties of the long-glass-fiber reinforced polyolefin molding and the long-glass-fiber reinforced polyolefin colored molding having excellent weathering resistance and high mechanical strength. In regard to the forms of the long-glass-fiber reinforced polyolefin molding claimed in Claims, and all preferred forms required for the molding, those described above for the composition can be applied.

In the present invention, the length of the glass fiber remaining in the long-glass-fiber reinforced polyolefin molding is preferably 0.2 mm or more in terms of weight average length. The reason for this is that with a length of less than 0.2 mm, the mechanical properties such as high strength, high flexural modulus, excellent creep properties and vibration fatigue properties, which are characteristic of the molding, cannot sufficiently be exhibited.

In order to maintain the weight average glass fiber length to 0.2 mm or more, it is effective to mold a mixture for melt-molding under relatively mild melt-molding conditions, i.e., low kneading force and low shear force applied to the melted resin. For example, it is necessary to make a measure in which a deep-channel screw is used to decrease the back pressure of the screw to the lowest possible value of 0 to 3 kg/cm$^2$ or the number of rotations of the screw used. Even with low kneading force, as described above, glass fibers are sufficiently dispersed in the composition of the present invention.

In the present invention, the composition may be a composition further comprising a polyolefin resin or polyolefin resin compound as long as the requirements of the invention are satisfied. Similarly, the molding may be a molding obtained by simply molding the composition or molding the composition further comprising a polyolefin resin or polyolefin resin compound as long as the requirements of the invention are satisfied. For example, it is necessary that the content of the long glass fibers in the molding obtained from the composition is 10 to 90 wt%. The reason for this is that with a content of less than 10 wt%, the properties of long-fiber reinforcement are not obtained. The content is preferably 10 to 70 wt%, more preferably 15 to 65 wt%.

Although the shape of the polyolefin resin or polyolefin resin compound for dilution is not limited, a powder shape or pellet shape is preferable. When long-glass-fiber reinforced polyolefin pellets are used as masterbatch pellets, the size and shape of the polyolefin resin or polyolefin resin compound for dilution are preferably similar to those of the long-glass-fiber reinforced polyolefin pellets. If the sizes of both materials are extremely different, a problem occurs in that the materials are separated in a hopper. The preferable shape of the polyolefin resin for dilution is a granular shape of 2 to 5 mm or a cylindrical shape having a diameter of 1 to 5 mm and a length of 1 to 10 mm.

Examples of reinforcements and fillers to be contained in the polyolefin resin or polyolefin resin compound which can be mixed with the long-glass-fiber reinforced polyolefin pellets include short glass fibers, glass chips, glass beads calcium carbonate, mica, talc, and the like. In a resin molding containing short glass fibers, glass chips or glass beads and long glass fibers, it is difficult to identify short glass fibers, glass chips or glass beads after burning the molding. Therefore, when the residue after burning is sieved, and the weight of the glass fibers having a length of 0,2 mm or more is 10 wt% or more, it can be considered as using long-glass-fiber reinforced polyolefin pellets as a raw material.

In the present invention, the photostabilizer, the photoabsorber, the antioxidant, carbon black, zinc sulfide and other additives can be added in any of the steps.

For example, the additives may be added in the step of impregnating a bundle, of long glass fibers for reinforcement with polyolefin, added and mixed after the long-glass-fiber reinforced polyolefin pellets are obtained, or added in meat mixing or melt molding. These additives can be added in a single step or separate steps, or added simultaneously or divided and separately added.

[Examples]

The present invention will be described in detail below with reference to examples and comparative examples. The present invention is not limited to these examples.

- A melt flow rate (the same meaning as melt index) was measured according to JIS K-7210.
- A color difference (Color Shift) was measured according to JIS Z-8722.
- A gloss value was measured according to JIS Z-8741.
- After a resin molding or resin pellet was ashed at 600°C, and the length of glass fibers was measured, the weight average glass fiber length 1w was calculated by 1w = (wi x 1i)/ wi (wi: weight of glass fibers, li: length of glass fibers).
- Measurements in tensile test, flexural test and impact test (notched) were carried out according to ASTM D638, ASTM D790 and ASTM D-256, respectively,
- An accelerated weathering test using a UV fluorescent lamp was carried out according to ASTM G-53.

- A weathering test using a sunshine carbon arc was carried out according to JIS D205.
- A weathering test using a xenon arc was carried out by the test method described in detail in the examples using Super xenon weather meter (model SC750-WAP) produced by Suga Shikenki Co., Ltd.
- GF floating was decided by deciding whether or not float of glass fibers was observed when the surface of a molding was magnified 50 times.

[Production of polyolefin containing weathering agent]

Polyolefin containing a weathering agent was extruded by a biaxial extruder (TEX30X, $L/D = 42$, produced by Nihon Seikosho Co., Ltd.) at a resin temperature of 220°C to obtain pellets of 3 mm.

As the polyolefin, polypropylene having a melt flow rate of 40 g/10 min. was used.

The produced four types PPMO1 to PPMO 5 are shown in Table 1.

[Production of long-glass-fiber reinforced polyolefin containing weathering agent]

(Production of maleic anhydride-modified polyolefin)

100 parts by weight of polypropylene having a melt flow rate of 8 g/10 min., 2 parts by weight of maleic anhydride, and 0.3 part by weight of 2,5-dimethyl-5-di(t-butylperoxy) hexyne-3 were melted and kneaded at 180°C by using a vented biaxial extruder to obtain maleic anhydride-grafted polyolefin exhibiting a melt flow rate of 120 g/10 min. This was referred to as "PPG01".

PPGO1 and polypropylene or two polymers and a plurality of additives were melted and kneaded in a biaxial extruder at 220°C, and the melted resin was then flowed into an impregnation bath provided with five metallic rolls provided therein end kept at a temperature of 280°C. Four glass rovings in each of which about 2320 glass filaments having a diameter of 16 $\mu$m and surface-treated with 0.2% by weight of $\gamma$-aminopropyltriethoxysilane as a surface treatment agent were collected were used. The four glass rovings were alternately passed on the five rolls in the presence of the melted resin in the impregnation bath, and then drawn at a rate of 1 m/min while being opened into the glass filaments on the rolls by applying about 2 kg of tension to the rovings to impregnate the glass fibers with the resin. The glass fibers impregnated with the resin were passed through a die having a diameter of 2.5 mm, cooled and then cut in a length of 10 mm by a cutter. The thus-obtained pellets were ashed by burning in a muffle furnace at 650°C for 1 hour, and the glass content was measured. As a result, the glass content was 50 wt%. After the pellets were ashed, the glass fibers having the same length as the pellets were arranged.

Table 2 shows compositions LERT01 to LERT05 of the produced long-glass-fiber reinforced polyolefin resin.

(Examples 1 to 5)

The produced long-glass-fiber reinforced polyolefin pellets shown in Table 2 and polypropylene pellets (size: 3 mm) having a melt flow rate of 60 g/10 min. were mixed. The compositions of the thus-obtained mixtures are shown in Table 3. Flexural and Izod test (notched) pieces according to ASTM were obtained by an injection molding machine with mold clamping force of 50 t using each of the compositions was used as a raw material at a resin temperature of 210°C and a mold temperature of 60°C. The molding conditions were bet so that flexural strength of about 1500 kg/cm$^2$, flexural modulus of about 55,000 kg/cm$^2$, and an Izod impact value; of about 20 kg $\cdot$ cm/cm were obtained in the early stage.

The weathering test (according to JIS D205) was carried out by the sunshine carbon arc method using the flexural test piece and Izod test piece. The weathering test was performed by using a sunshine weather meter (WEL-SUN-DC(H)) produced by Suga Shikenki Co., Ltd. under conditions in that a test piece was sprayed with water for 12 minutes in irradiation for 60 minutes at a black panel temperature of 63°C ($\pm$2°C).

Table 3 shows the compositions of the molding materials used and the test results obtained. Even after the weathering test for 1500 Hr, color difference (E*) was 7 or less. The rates of retention of flexural strength, flexural modulus and impact value were 90% or more.

The rate of retention is represented by (physical properties after 1500 hr.)/(physical properties before the weathering test) x 100.

(Comparative Examples 1 to 4)

The produced long-glass-fiber reinforced polyolefin pellets shown in Table 2 and polypropylene pellets (size: 3 mm) having a melt flow rate of 60 g/10 min. were mixed. The compositions of the thus-obtained mixtures are shown in Table 3. Flexural and Izod test (notched) pieces according to ASTM were obtained by an injection molding machine with mold clamping force of 50 t using each of the compositions as a raw material at a resin temperature of 210°C and a mold temperature of 60°C. The molding conditions were set so that flexural strength of about 1500 kg/cm$^2$, flexural modulus

of about 55,000 kg/cm$^2$, and an Izod impact value of about 20 kg·cm/cm were obtained in the early stage.

The weathering test and evaluation of physical properties of these test pieces were carried out by the same method as in Examples 1 to 5.

Table 4 shows the compositions of the molding materials used and the test results obtained.

After the accelerated weathering test for 1500 hours, the rates of retention of the physical properties, i.e., flexural strength, flexural modulus, Izod impact value and color difference (ΔE*) were 30% or less, 70% or less, 55% or less and 23 or more, respectively.

(Examples 5 to 9)

The produced long-glass-fiber reinforced polyolefin pellets shown in Table 2, polypropylene pellets (size: 3 mm) having a melt flow rate of 50 g/10 min., low-density polyethylene containing 30% by weight of carbon black and polypropylene containing additives shown in Table 1 were mixed to obtain material mixtures for molding. Flexural test pieces according to ASTM were obtained by using each of the mixtures with mold clamping force of 50 t at a resin-temperature of 240°C and a mold temperature of 70°C.

The accelerated weathering test was carried out by using the obtained test pieces and an ultraviolet fluorescent lamp according to ASTM G-53. The test was carried out under conditions in that each test piece was irradiated for 8 hours at a black panel temperature of 70°C in a cycle of 12 hours. In this test, irradiation energy was about 2.7 W/m2.

Table 5 shows the compositions of the molding material mixtures and the physical properties before the accelerated weathering test and after the accelerated weathering test for 2000 hours.

After the weathering test for 2000 hours, the rates of retention of flexural strength and flexural modulus were about 85% or more and 90% or more, respectively.

The color difference (ΔE*) between the test piece after the passage of 2000 hours and the test piece before the weathering test was 3 or less.

(Comparative Examples 5 to 7)

The produced long-glass-fiber reinforced polyolefin pellets shown in Table 2, polypropylene pellets (size: 3 mm) having a melt flow rate of 50 g/10 min., low-density polyethylene containing 30% by weight of carbon black and polypropylene containing additives shown in Table 1 were mixed to obtain material-mixtures for molding. Flexural test pieces according to ASTM were obtained by using each of the mixtures with mold clamping force of 50 t at a resin temperature of 240°C and a mold temperature of 70°C.

The accelerated weathering test was carried out by using the obtained test pieces and an ultraviolet fluorescent lamp according to ASTM G-53. The test was carried out under conditions in that each test piece was irradiated for 8 hours at a black panel temperature of 70°C in a cycle of 12 hours. In this test, irradiation energy was about 2.7 W/m2.

Table 6 shows the compositions of the molding material mixtures and the physical properties before the accelerated weathering test and after the accelerated weathering test for 2000 hours.

After the weathering test for 2000 hours, the rates of retention of flexural strength and flexural modulus were about 40% or less and 70% or less, respectively.

The color difference (ΔE*) between the test piece after the passage of 2000 hours and the test piece before the weathering test was 8 or more.

(Experimental preparation of polypropylene containing white pigment)

Polyolefin containing a white pigment or carbon black was extruded by using a biaxial extruder (TEX30X, L/D=42, produced by Nihon Seikosho Co., Ltd.) at a resin temperature of 220°C to obtain pellets of 3 mm.

As the polyolefin, polypropylene having a melt flow rate of 40 g/10 min. was used.

The produced four types of polyolefin PPM06 to PPM09 containing a white pigment or carbon black are shown in Table 7.

(Examples 10 and 11, Comparative Examples 8 and 9)

The produced long-glass-fiber reinforced polyolefin pellets shown in Table 2, polypropylene pellets (size: 3 mm) having a melt flow rate of 50 g/10 min., the produced polypropylene containing a white pigment shown in Table 7 and the produced polypropylene containing additives shown in Table 1 were mixed to obtain material mixtures for molding. Flexural test pieces according to ASTM were obtained by using each of the mixtures with mold clamping force of 50 t at a resin temperature of 240°C and a mold temperature of 70°C.

The accelerated weathering test was carried out by using a xenon weathering tester (model SC750-WAP) produced by Suga Shikenki.

EP 0 812 882 A1

Irradiation was performed by using light of 300 nm to 400 nm with a total energy of 164 W/m2 at a black panel temperature of 89°C.

In order to perform a weathering test for automobile interior materials, light of 320 nm or less was cut by using a filter.

The test time was 377 hours.

Table 6 shows the compositions of the molding material mixtures and the physical properties before the accelerated weathering test and after the accelerated weathering test for 377 hours.

In Comparative Examples 8 and 9 in which titanium oxide was used as a white pigment, significant deterioration was observed in the Izod impact value of the molding.

Table 1

| Name | Description | Polyolefin containing additive | | | | |
|---|---|---|---|---|---|---|
| | | PPM01 | PPM02 | PPM03 | PPM04 | PPM05 |
| Polypropylene resin | | 84.00 | 83.02 | 84.00 | 80.52 | 99.00 |
| Irganox 1010 | Phenol antioxidant | 0.33 | 0.66 | 0.33 | 0.66 | 0.33 |
| Irgafos 168 | Phosphorus antioxidant | 0.67 | 1.32 | 0.67 | 1.32 | 0.67 |
| MARK LA-77 | Hindered amine photostabilizer | 12.50 | 7.50 | 10.00 | 12.50 | |
| MARK LA-36 | Benzotriazole UV absorber | 2.50 | 7.50 | | | |
| Adekastab LA801 | Benzoate UV absorber | | | 5.00 | 5.00 | |
| Irganox 1010 and Irgafos 168 were produced by Ciba Geigy Co.,Ltd. MARK LA-77 and MARK LA-36 were produced by Adeka Argus Co.,Ltd. Adekastab LA801 was produced by Asahi Denka Kogyo K.K. | | | | | | |

Table 2

| Name | Description | Composition of long-glass-fiber-reinforced polyolefin (wt%) | | | | |
|---|---|---|---|---|---|---|
| | | LFRT01 | LFRT02 | LFRT03 | LFRT04 | LFRT05 |
| PPG01 | Maleic anhydride-modified polypropylene | 10 | 10 | 10 | 10 | 10 |
| Polypropylene | | 39.49 | 37.24 | 38.99 | 38.735 | 37.25 |
| Glass fiber | | 50 | 50 | 50 | 50 | 50 |
| Irganox 1010 | phenol antioxidant | 0.17 | 0.17 | 0.17 | 0.17 | 0.17 |
| Irgafos 168 | phosphorus antioxidant | 0.34 | 0.34 | 0.34 | 0.34 | 0.34 |
| MARK LA-77 | Hindered amine photostabilizer | | 1.88 | 0.40 | 0.38 | 1.12 |
| MARK LA-36 | Benzotriazole UV absorber | | 0.38 | 0.10 | | |
| Adekastab La801 | Benzoate UV absorber | | | | 0.38 | 1.12 |

PPG01 was the maleic anhydride polyolefin desceibed in the specification.
Irganox 1010 and Irgafos 168 were produced by Ciba Geigy Co.,Ltd.
MARK LA-77 and MARK LA-36 were produced by Adeka Argus Co.,Ltd.
Adekastab LA801 was produced by Asahi Denka Kogyo K.K.

Table 3

| Composition | Unit | Example 1 | Example 2 | Example 3 | Example 4 |
|---|---|---|---|---|---|
| LFRT01 | wt% | 37.5 | | | 37.5 |
| LFRT02 | wt% | 12.5 | | | |
| LFRT03 | wt% | | | 50.0 | |
| LFRT04 | wt% | | 50.0 | | |
| LFRT05 | wt% | | | | 12.5 |
| Polypropylene | wt% | 50.0 | 50.0 | 50.0 | 50.0 |
| Evaluation Results | | | | | |
| Physical properties before start of accelerated weathering test | | | | | |
| Flexural strength | kg/cm$^2$ | 1556 | 1578 | 1550 | 1593 |
| Flexural modulus | kg/cm$^2$ | 57226 | 56250 | 54900 | 55400 |
| Izod impact value | kg·cm/cm | 23.0 | 23.5 | 25.0 | 22.5 |
| Weight average fiber length | mm | 1.5 | 1.65 | 1.75 | 1.45 |
| Physical properties after weathering test for 1500 hr. | | | | | |
| Flexural strength | kg/cm$^2$ | 1420 | 1435 | 1480 | 1470 |
| Flexural modulus | kg/cm$^2$ | 57387 | 55500 | 54500 | 54500 |
| Izod impact value | kg·cm/cm | 21.0 | 22.5 | 23.5 | 20.5 |
| Color difference | $\Delta E^*$ | 6.8 | 6.6 | 6.9 | 6.3 |
| Glass float | | Not observed | Not observed | Not observed | Not observed |

Table 4

14

| Composition | Unit | Comparative Example 1 | Comparative Example 2 | Comparative Example 3 | Comparative Example 4 |
|---|---|---|---|---|---|
| LFRT01 | wt% | 50 | 45 | 40 | 45 |
| LFRT02 | wt% | | 5 | | |
| LFRT03 | wt% | | | 5 | |
| LFRT04 | wt% | | | 5 | |
| LFRT05 | wt% | | | | 5 |
| Polypropylene | wt% | 50 | 50 | 50 | 50 |
| Evaluation Results | | | | | |
| Physical properties before start of accelerated weathering test | | | | | |
| Flexural strength | kg/cm$^2$ | 1556 | 1578 | 1550 | 1593 |
| Flexural modulusf | kg/cm$^2$ | 57226 | 56250 | 54900 | 55400 |
| Izod impact value | kg·cm/cm | 23.0 | 23.5 | 25.0 | 22.5 |
| Residual fiber length | mm | 1.5 | 1.65 | 1.75 | 1.45 |
| Physical properties after weathering test for 1500 hr. | | | | | |
| Flexural strength | kg/cm$^2$ | 412 | 458 | 432 | 450 |
| Flexural modulus | kg/cm$^2$ | 37550 | 39100 | 36500 | 36550 |
| Izod impact value | kg·cm/cm | 11.0 | 11.5 | 12.5 | 11.8 |
| Color difference | ΔE* | 32 | 23.5 | 24 | 25 |
| Glass float | | present | present | present | present |

Table 5

| Composition | Unit | Example 5 | Example 6 | Example 7 | Example 8 | Example |
|---|---|---|---|---|---|---|
| LFRT01 | wt% | 50.00 | | 48.75 | | 60.00 |
| LFRT02 | wt% | | | 50.00 | | |
| LFRT03 | wt% | | 50.00 | | 80.00 | |
| LFRT04 | wt% | | | | | |
| LFRT05 | wt% | | | | | |
| | | | | | | |
| PPM01 | wt% | 7.50 | | | | |
| PPM02 | wt% | | | | | |
| PPM03 | wt% | | 5.60 | | | |
| PPM04 | wt% | | | | | 5.00 |
| PPM05 | wt% | | | | | |
| Polyethylene containing 30wt% carbon black | wt% | 2.50 | 3.75 | 1.25 | 4.00 | 2.33 |
| Polypropylene | wt% | 40.00 | 40.65 | | 16.00 | 32.67 |
| Evaluation Results | | | | | | |
| Physical properties before start of | | | | | | |
| Flexural strength | kg/cm$^2$ | 1450 | 1470 | 2250 | 1900 | 1750 |
| Flexural modulus | kg/cm$^2$ | 55400 | 55700 | 107000 | 74000 | 61000 |
| Weight average fiber length | mm | 1.56 | 1.7 | 1.6 | 1.9 | 1.45 |
| Physical properties after weathering test | | | | | | |
| Flexural strength | kg/cm$^2$ | 1320 | 1355 | 1950 | 1750 | 1560 |
| Flexural modulus | kg/cm$^2$ | 54500 | 54800 | 105400 | 71000 | 59500 |
| Color difference | ΔE* | 1.6 | 1.4 | 2.3 | 1.6 | 1.8 |
| Glass float | | Not | Not | Not | Not | Not |

EP 0 812 882 A1

Table 6

| Composition | Unit | Comparativ | Comparativ | Comparativ |
|---|---|---|---|---|
| LFRT01 | wt% | 50.00 | 73.13 | 80.00 |
| LFRT02 | wt% | | | |
| LFRT03 | wt% | | 25.00 | |
| LFRT04 | wt% | | | |
| LFRT05 | wt% | | | |
| PPM01 | wt% | | | |
| PPM02 | wt% | | | |
| PPM03 | wt% | | | |
| PPM04 | wt% | | | 0.75 |
| PPM05 | wt% | | | |
| Polyethylene containing 30wt% carbon black | wt% | 2.50 | 1.88 | 1.25 |
| Polypropylene | wt% | 47.50 | | 18.00 |
| Evaluation Results | | | | |
| Physical properties before start of | | | | |
| Flexural strength | kg/cm$^2$ | 1450 | 2250 | 1850 |
| Flexural modulus | kg/cm$^2$ | 55400 | 106500 | 74000 |
| Weight average fiber length | mm | 1.56 | 1.7 | 1.6 |
| Physical properties after weathering test | | | | |
| Flexural strength | kg/cm$^2$ | 315 | 750 | 850 |
| Flexural modulus | kg/cm$^2$ | 33200 | 64000 | 48000 |
| Color difference | ΔE* | 10.0 | 9.5 | 8.5 |
| Glass float | | present | present | present |

Table 7

| Name | Description | Polyolefin containing additive | | | |
|---|---|---|---|---|---|
| | | PPM06 | PPM07 | PPM08 | PPM09 |
| Polypropylene resin | | 79.00 | 79.00 | 69.00 | 69.00 |
| Irganox 1010 | Phenol antioxidant | 0.33 | 0.33 | 0.33 | 0.33 |
| Irgafos 168 | Phosphorus antioxidant | 0.67 | 0.67 | 0.67 | 0.67 |
| Carbon black | | | | 10.00 | 10.00 |
| Titanium oxide (powdery) | | | 20.00 | | 20.00 |
| Zinc sulfide (powdery) | | 20.00 | | 20.00 | |
| Irganox 1010 and Irgafos 168 were produced by Ciba Geigy Co.,Ltd. | | | | | |

Table 8

| Composition | Unit | Example 9 | Example 10 | Comparative Example 8 | Comparative Example 9 |
|---|---|---|---|---|---|
| LFRT01 | wt% | 50.00 | | 50.00 | |
| LFRT02 | wt% | | 50.00 | | 50.00 |
| LFRT03 | wt% | | | | |
| LFRT04 | wt% | | | | |
| LFRT05 | wt% | | | | |
| PPM01 | wt% | 5.00 | | 5.00 | |
| PPM02 | wt% | | | | |
| PPM03 | wt% | | | | |
| PPM04 | wt% | | | | |
| PPM05 | wt% | | | | |
| PPM06 | wt% | | | | |
| PPM07 | wt% | | | | |
| PPM08 | wt% | 5.00 | 5.00 | | |
| PPM09 | wt% | | | 5.00 | 5.00 |
| Polypropylene | wt% | 40.00 | 45.00 | 40.00 | 45.00 |
| Evaluation Results | | | | | |
| Physical properties before start of accelerated weathering test | | | | | |
| Flexural strength | $kg/cm^2$ | 1450 | 1470 | 1150 | 1090 |
| Flexural modulus | $kg/cm^2$ | 53500 | 53600 | 47500 | 47500 |
| Izod impact value (notched) | kg·cm/cm | 18.5 | 19.5 | 4.4 | 4.3 |
| Weight average fiber length | mm | 1.55 | 1.82 | 1.2 | 0.9 |
| Physical properties after weathering test for 377 hr. | | | | | |
| Flexural strength | $kg/cm^2$ | 1320 | 1355 | 1050 | 1055 |
| Flexural modulus | $kg/cm^2$ | 52500 | 53500 | 46500 | 4600 |
| Izod impact value (notched) | kg·cm/cm | 17.5 | 16.5 | 3.9 | 3.2 |
| Color difference | $\Delta E^*$ | 0.95 | 1.05 | 1.4 | 1.4 |
| Glass float | | Not observed | Not observed | Not observed | Not observed |

Industrial Applicability

The present invention can provide a resin molding which has high impact strength and is thus hardly broken, which is cracked but hardly broken in an impact mode, and which has excellent repeated fatigue resistance and weathering resistance and thus has high reliability for outdoor use for a long period of time, and a material composition therefor.

The long-glass-fiber reinforced polyolefin molding and the material composition therefor of the present invention have (1) the ability to decrease cost because of low specific gravity, (2) the improved recycling ability because of the use of general-purpose plastic as a base resin, and (3) the ability to decrease the number of components and assembly cost because of the ability to impart some functions to a molding of the same resin composition, as compared with conventional short-fiber reinforced engineering plastics and engineering plastic moldings.

**Claims**

1. A composition comprising at least:

   (A) long-glass-fiber reinforced polyolefin pellets which are obtained by impregnating a bundle of glass fibers with a polyolefin and then cutting the glass fibers in a length of 2 to 150 mm in the direction of the fibers, and which contain 10 to 90 wt% of glass fibers, the glass fibers in the pellets being arranged in substantially the same length as the pellets;
   (B) a photostabilizer; and
   (C) a photoabsorber;

   wherein the total amount of (B) the photostabilizer and (C) the photoabsorber is 0.25 to 7.5 parts by weight based on the total of 100 parts by weight of polyolefin.

2. The composition according to Claim 1, further comprising (D) carbon black, wherein the total amount of (B) the photostabilizer, (C) the photoabsorber and (D) carbon black is 1.0 to 8.0 parts by weight based on the total of 100 parts by weight of polyolefin.

3. The composition according to Claim 1, further comprising (D) carbon black and (E) zinc sulfide, wherein the total amount of (B) the photostabilizer, (C) the photoabsorber, (D) carbon black and (E) zinc sulfide is 1.0 to 8.0 parts by weight based on the total of 100 parts by weight of polyolefin.

4. The composition according to Claim 1, further comprising (F) an antioxidant, wherein the total amount of (B) the photostabilizer, (C) the photoabsorber and (F) the antioxidant is 0.25 to 7.5 parts by weight based on the total of 100 parts by weight of polyolefin.

5. The composition according to Claim 4, further comprising (D) carbon black, wherein the total amount of (B) the photostabilizer, (C) the photoabsorber, (D) carbon black and (F) the antioxidant is 1.0 to 8.0 parts by weight based on the total of 100 parts by weight of polyolefin.

6. The composition according to Claim 4, further comprising (D) carbon black and (E) zinc sulfide, wherein the total amount of (B) the photostabilizer, (C) the photoabsorber, (D) carbon black, (E) zinc sulfide and (F) the antioxidant is 1.0 to 8.0 parts by weight based on the total of 100 parts by weight of polyolefin.

7. The composition according to any on of Claims 1 to 6, wherein the photostabilizer comprises at least one selected from hindered amines, and the photoabsorber comprises at least one selected from the group consisting of benzotriazoles and benzoates.

8. The composition according to any one of Claims 4 to 6, wherein the antioxidant comprises at least one selected from the group consisting of phenols and phosphorus compounds.

9. The composition according to Claim 8, wherein the antioxidant comprises at least one selected from the group consisting of phenols and phosphorus compounds, the photostabilizer comprises at least one selected from hindered amines, and the photoabsorber comprises at least one selected from the group consisting of benzotriazoles and benzoates.

10. The composition according to any one of Claims 1 to 6, wherein the polyolefin is at least one selected from the group consisting of polyethylene, polypropylene, polybutylene, polypentene and substitution products thereof.

11. The Composition according to any one of Claims 1 to 6, wherein the polyolefin is at least one selected from the group consisting of modified polyethylene, modified polypropylene, modified polybutylene, modified polypentene and substitution products thereof

12. The composition according to any one of Claims 1 to 6, wherein the glass fibers are glass fibers having a weight average fiber length of 0.2 mm or more.

13. A composition obtained by melting and kneading a composition according to any one of Claims 1 to 6.

14. A long-glass-fiber reinforced polyolefin molding obtained by melt-molding a composition according to any one of Claims 1 to 6.

15. The long-glass-fiber reinforced polyolefin molding according to Claim 14 obtained by melt molding by at least one molding method selected from the group consisting of injection molding, injection-press molding, monoaxial extrusion molding, biaxial extrusion molding and heating press.

16. A long-glass-fiber reinforced polyolefin molding comprising at least:

   (a) a polyolefin;
   (b) glass fibers having a fiber length of 2 to 150 mm;
   (B) a photostabilizer; and
   (C) a photoabsorber;

   wherein the total amount of (B) the photostabilizer and (C) the photoabsorber is 0.25 to 7.5 parts by weight based on the total of 100 parts by weight of polyolefin, the content of the glass fibers is 10 to 90 wt%.

17. The molding according to Claim 16, further comprising (D) carbon black, wherein the total amount of (B) the photostabilizer, (C) the photoabsorber and (D) carbon black is 1.0 to 8.0 parts by weight based on the total of 100 parts by weight of polyolefin.

18. The molding according to Claim 16, further comprising (D) carbon black and (E) zinc sulfide, wherein the total amount of (B) the photostabilizer, (C) the photoabsorber, (D) carbon black and (E) zinc sulfide is 1.0 to 8.0 parts by weight based on the total of 100 parts by weight of polyolefin.

19. The molding according to Claim 16, further comprising (F) an antioxidant, wherein the total amount of (B) the photostabilizer, (C) the photoabsorber and (F) the antioxidant is 0.25 to 7.5 parts by weight based on the total of 100 parts by weight of polyolefin.

20. The molding according to Claim 19, further comprising (D) carbon black, wherein the total amount of (B) the photostabilizer, (C) the photoabsorber, (D) carbon black and (F) the antioxidant is 1.0 to 8.0 parts by weight based on the total of 100 parts by weight of polyolefin.

21. The composition according to Claim 19, further comprising (D) carbon black and (E) zinc sulfide, wherein the total amount of (B) the photostabilizer, (C) the photoabsorber, (D) carbon black, (E) zinc sulfide and (F) the antioxidant is 1.0 to 8.0 parts by weight based on the total of 100 parts by weight of polyolefin.

22. The molding according to any on of Claims 16 to 21, wherein the photostabilizer comprises at least one selected from hindered amines, and the photoabsorber comprises at least one selected from the group consisting of benzotriazoles and benzoates.

23. The molding according to any one of Claims 19 to 21, wherein the antioxidant comprises at least one selected from the group consisting of phenols and phosphorus compounds.

24. The molding according to Claim 23, wherein the antioxidant comprises at least one selected from the group consisting of phenols and phosphorus compounds, the photostabilizer comprises at least one selected from hindered amines, and the photoabsorber comprises at least one selected from the group consisting of benzotriazoles and benzoates.

25. The molding according to any one of Claims 16 to 21, wherein the polyolefin is at least one selected from the group consisting of polyethylene, polypropylene, polybutylene, polypentene and substitution products thereof.

26. The molding according to any one of Claims 16 to 21, wherein the polyolefin is at least one selected from the group consisting of modified polyethylene, modified polypropylene, modified polybutylene, modified polypentene and substitution products thereof

27. The molding according to any one of Claims 16 to 21, wherein the glass fibers are glass fibers having a weight average fiber length of 0.2 mm or more.

**INTERNATIONAL SEARCH REPORT**

| International application No. |
| --- |
| PCT/JP96/03786 |

**A. CLASSIFICATION OF SUBJECT MATTER**

Int. $Cl^6$ C08L23/00, C08K7/14, C08K5/18, 5/3475, 5/098, 5/101

According to International Patent Classification (IPC) or to both national classification and IPC

**B. FIELDS SEARCHED**

Minimum documentation searched (classification system followed by classification symbols)

Int. $Cl^6$ C08L23/00-23/36, C08K7/14, C08K5/18, 5/3475, 5/098, 5/101

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| P | JP, 08-60001, A (Toray Industries, Inc.), March 5, 1996 (05. 03. 96), Claim; paragraph (0023) & EP, 635542, A2 | 1 - 27 |
| P | JP, 08-150616, A (Idemitsu Petrochemical Co., Ltd.), June 11, 1996 (11. 06. 96), Claim; paragraph (0019) (Family: none) | 1 - 27 |
| A | JP, 06-212032, A (Tonen Chemical Corp.), August 2, 1994 (02. 08. 94), Claim (Family: none) | 1 - 27 |
| A | JP, 64-36633, A (Adeka Argus Chemical Co., Ltd.), February 7, 1989 (07. 02. 89), Claim; page 6, lower left column & US, 5081170, A | 1 - 27 |
| A | JP, 62-4733, A (Mitsubishi Petrochemical Co., Ltd.), | 1 - 27 |

[X] Further documents are listed in the continuation of Box C.    [ ] See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| March 28, 1997 (28. 03. 97) | April 8, 1997 (08. 04. 97) |

| Name and mailing address of the ISA/ | Authorized officer |
| --- | --- |
| Japanese Patent Office | |
| Facsimile No. | Telephone No. |

Form PCT/ISA/210 (second sheet) (July 1992)

**INTERNATIONAL SEARCH REPORT**

| International application No. |
|---|
| PCT/JP96/03786 |

C (Continuation). DOCUMENTS CONSIDERED TO BE RELEVANT

| Category* | Citation of document, with indication, where appropriate, of the relevant passages | Relevant to claim No. |
|---|---|---|
| | January 10, 1987 (10. 01. 87),<br>Claim (Family: none) | |

Form PCT/ISA/210 (continuation of second sheet) (July 1992)